# EUROPEAN PATENT APPLICATION

(11) **EP 3 671 618 A1**
(43) Date of publication of application: **24.06.2020**
(21) Application number: 18213559.0
(22) Date of filing: 18.12.2018
(51) Int. Cl.: G06Q 50/06, G06Q 20/16

(54) **BLOCKCHAIN BASED MANAGEMENT OF ELECTRICITY DELIVERY**

(71) Applicant: Deutsche Telekom AG, 53113 Bonn (DE); Technische Universität Berlin, 10625 Berlin (DE)
(72) Inventor: WESTERKAMP, Martin, 10439 Berlin (DE)
(74) Representative: Vossius & Partner Patentanwälte Rechtsanwälte mbB

(57) **Abstract**

A method and system for processing a power charging request of a user at a charging station based on a blockchain network, wherein one or more operators unit is connected to the blockchain network and each operator unit is connected to one or more charging stations of the operator.

## Description

The present invention relates to the field of data processing in a telecommunication network. In detail, the present invention relates to a method and system for managing a charging or recharging process of electric vehicles at an electric vehicle charging station.

The present electric vehicle charging infrastructure consists of charging stations which are operated by different operators. Usually, said operators are power suppliers, or are at least associated with power suppliers. To charge an electric vehicle, the owner/operator of the electric vehicle, hereinafter referred to as the user, must have one or more contracts for charging with the electric charging station operators.

Furthermore, an authentication process is implemented for the operator/owner and/or the electric vehicle itself with the charging station operator. Embodiments of this authentication mechanism of the state of the art often comprise RFID identification cards which could be read directly at the charging station and authorize the user. Additionally or alternatively, a mobile device, such as a smart phone, may be used to authorize and authenticate the user vis-à-vis a charging station directly or via a telecommunication network vis-a-vis the charging station operator. For this reason, most charging stations are connected to a telecommunication network to communicate with the respective charging station operators.

Blockchain is a technology that allows multiple parties to share a common, append-only database. This is useful for enabling transactions between organizations, departments or individuals without relying on an intermediary, by creating a transparent, time-stamped history of every transaction. The database grows larger with every new transaction and must be stored in multiple locations, however, this is often cheaper than paying a trusted intermediary to operate a centralized database, and it is also highly resilient because there is no single point of failure.

The main feature of the blockchain technology is that it is a decentralized system for managing security and information. This is fundamentally different from most existing solutions where data is kept and managed within a central system, with security built around it, rather than within it.

The blockchain technology provides an architecture for so-called "trustless trust". It allows the users to trust the outputs of the system without trusting single actors within the system.

In detail, a blockchain is a list of validated blocks, each linking to its predecessor all the way to a genesis block, i.e. a first initial block. The aforementioned term block of the blockchain refers to a data structure containing a grouping of so-called transactions, preferably marked with a timestamp, and having a fingerprint of a respective previous block.

The block header is preferably hashed and a nonce is added to produce a proof of work. Additionally or alternatively added transactions are validated before including them in a valid block. Valid blocks are then added to the main blockchain by network consensus. Each node verify included transactions and only accept the block in case of success. A transaction, in simple terms, is a signed data structure. Transactions are transmitted over the blockchain network, collected by miners, and included into blocks, before made permanent on the blockchain.

The term blockchain is typically also used to describe an implementation of a blockchain network. In other words, a blockchain provides a distributed, shared state all participants agree on using a consensus algorithm.

Hereinafter the term blockchain is used to describe any kind of distributed ledger technology.

In practice, smart contracts are used for enforcing a logic on a blockchain, defining particular forms of tokens and so forth. Smart contracts, as first proposed by Nick Szabo in 1994, are computer programs that can enforce rules without requiring a third party. A smart contract is typically written in a high level programming language, like Solidity or Viper, and compiled to bytecode. This bytecode can be deployed on the blockchain whereby an address is returned at which the smart contract's functions can be called. Execution of a smart contract requires sending a transaction to the contract's address, while specifying which function is to be executed with parameters.

US 2017/0358168 A1 relates to a system and methods for wireless charging stations. The document suggests a blockchain-based decentralized transaction settlement system and method for wireless electric vehicle charging stations which enables real-time monitoring of electric vehicle charging demand for distribution system managers. The system is operable to enable easy implementation of rebate programs for electric vehicle owners, as well as charging station owners, and provides a secure, cost efficient, and transparent transaction settlement system using blockchain software technology.

In other words, it has been suggested to connect charging stations and electric vehicle owners to a blockchain and use an authentication and payment system implemented in the blockchain to administrate the charging process, both features are well-known to the skilled person.

However, such a system and method is cumbersome, since the blockchain process may take several minutes to process an authentication or payment process. Furthermore, an energy provider may not be willing to lose control over the charging station and thus may not allow the charging station itself to receive and send micropayments, or be connected to a blockchain network.

Furthermore, the technical implementation of said system and method has several disadvantages. One disadvantage is that an often used implementation would preferably use a wireless telecommunication network, such as 3G or LTE networks. However, in such networks, no public IP addresses are used and thus a direct access between a mobile device and a charging station is not possible.

A suggested solution for this problem would be the use of a provider internal VPN network. However, such a solution again would increase the complexity and thus increase the risk of failure for the system.

The above problems are solved by the subject-matter specified in the independent claims. The dependent claims relate to further aspects of the invention.

According to the invention a method for processing a power charging request of a user at a charging station based on a blockchain network is provided, wherein one or more operators unit is connected to the blockchain network and each operator unit is connected to one or more charging stations of the operator, wherein the method comprises the steps of:
A) in a user registration phase, each of the one or more operator units executing a registration smart contract for registration of one or more user of the operator to the blockchain network,
   wherein upon execution of the registration, smart contract authentication, authorization, and accounting, AAA, information about each of the one or more users is stored in the blockchain network;
B) in a processing phase, one specific one of the one or more operator units, receiving a charging request from a specific user for charging at the charging station operated by the specific operator of the specific operator unit; executing a AAA smart contract for authentication, authorization, and accounting of the specific user in the blockchain network; receiving from the blockchain network the stored AAA information about the specific user; and determining whether or not the charging request is confirmed and charging is initiated based on the AAA information received from the blockchain network,
wherein upon execution of the AAA smart contract the AAA information of the specific user is retrieved in the blockchain network and returned to the specific operator unit.

In an aspect of the invention the operator unit is located in a central control instance of the operator.

In an aspect of the invention the operator unit is located at a charging station of the operator.

In an aspect of the invention the charging request is sent from the user to the operator unit, preferably via a wireless telecommunication network.

In an aspect of the invention the charging request is sent from the user to the charging station and then relayed to the operator unit, preferably via a wireless telecommunication network.

In an aspect of the invention the information about each of the one or more users comprises one or more zero-knowledge proofs that permit verifying required user properties.

A detailed description of preferred embodiments of the above mentioned zero-knowledge proof in a blockchain system is described in "ZoKrates - Scalable Privacy-Preserving Off-Chain Computations" by Jacob Eberhardt and Stefan Tai which is incorporated herein by reference and a copy of which has been provided to the European Patent Office together with this description.

According to the invention a blockchain network for processing a charging request of a user is provided, wherein the blockchain network is connected to one or more operator unit and each operator unit is connected to one or more charging stations of an operator, wherein the blockchain network is configured to store authentication, authorization, and accounting, AAA, information for one or more users, wherein the blockchain network is configured to process a registration smart contract from a specific operator unit for storing AAA information about a specific user of a specific operator in the blockchain network, wherein the blockchain network is configured to process a AAA smart contract from a specific operator unit for a specific user of a specific operator for retrieving AAA information about the specific user in the blockchain network and returning the AAA information to the operator unit.

In an aspect of the invention the AAA information about a specific user comprises one or more zero-knowledge proofs that permit verifying required user properties.

According to the invention an operator unit for processing a charging request of a user based on a blockchain network as described above is provided, wherein the operator unit is connected to the blockchain network and is connected to one or more charging stations of the operator, wherein the operator unit is configured to
A) in a user registration phase, execute a registration smart contract for registration of one or more user of the operator to the blockchain network; and
B) in a processing phase,
   receive a charging request from a specific user for charging at a charging station;
   execute a AAA smart contract for the specific user in the blockchain network;
   receive from the blockchain network the stored AAA information about the specific user; and
   determine whether or not the charging request is confirmed and charging is initiated based on the AAA information received from the blockchain network.

According to the invention a system for processing a charging request of a user based on a blockchain network, comprising a blockchain network as described above and one or more operator units as described above.

In an aspect of the invention the operator unit is located in a central control instance of the operator.

In an aspect of the invention the operator unit is located at a charging station of the operator.

In an aspect of the invention the charging request is sent from the user to the operator unit, preferably via a wireless telecommunication network.

In an aspect of the invention the charging request is sent from the user to charging station and then relayed to the operator unit, preferably via a wireless telecommunication network.

### Brief description of the Drawing

The above-described objects, advantages and features of the present invention, as well as others, will be more readily understood from the following detailed description of certain preferred embodiments of the invention, when considered in conjunction with the accompanying drawing in which:

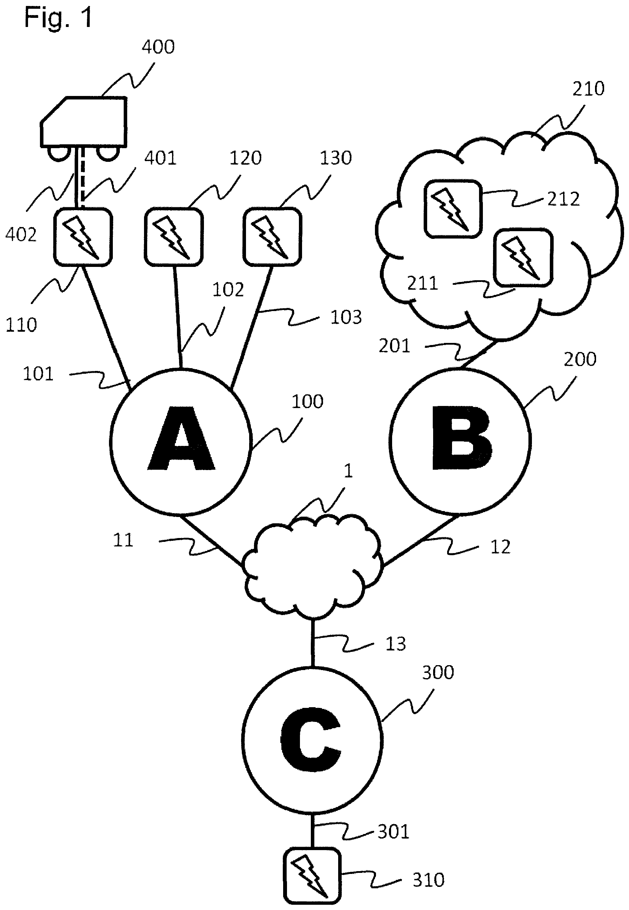

- Fig. 1: shows a schematic diagram of a charging infrastructure according to an embodiment of the present invention.

### Detailed description of the Drawing

Hereinafter, embodiments disclosed in this specification will be described in detail with reference to the accompanying drawing. In this specification, the same or equivalent components may be provided with the same or similar reference numbers even in different embodiments, and description thereof will not be repeated.

A singular representation may include a plural representation unless it represents a definitely different meaning from the context. In describing the present invention, if a detailed explanation for a related known technology or construction is considered to unnecessarily divert the gist of the present disclosure, such explanation has been omitted but would be understood by those skilled in the art.

It should be noted that the attached drawing is provided to facilitate understanding of the embodiments disclosed in this specification, and should not be construed as limiting the technical idea disclosed in this specification by the attached drawing.

The terminology used herein is for the purpose of describing particular embodiments only and is not intended to be limiting to the disclosure. It will be further understood that the terms "comprises" and/or "comprising," when used in this specification, specify the presence of stated features, integers, steps, operations, elements, and/or components.

In an embodiment of the invention electric charging station operators A, B, and C, which could also be power suppliers or grid operators, are participating in the blockchain 1 according to the invention. For this purpose each operator A, B, and C has one or more respective operator units 100, 200, and 300 which are connected to the blockchain network via respective suitable network connections 11, 12, and 13. That is, each operator participates via a node in the blockchain network 1 and the nodes communicating via connections 11, 12, and 13 with each other and thus forming the blockchain network 1.

Hereinafter the terms operator A, B, and C and operator unit 100, 200, and 300 may be used in an overlapping definition. For example if information is sent from an operator to the blockchain this is equivalent to information being sent from the operator unit to the blockchain network. In other words the operator is an abstract entity and the operator unit is the corresponding physical entity. When an abstract method concept is described the term operator is preferred and when a physical process is described the term operator unit is preferred.

Each operator 100, 200, and 300 operates one or more charging stations 110, 120, 130, 211 212, 310. In the following, controlling of the charging stations is described in detail, the supply with power via a suitable power connection and/or local power source is considered to be subject-matter known to the skilled person.

According to embodiments of the invention, different types of operator networks are possible and that types can also be mixed in hybrid-embodiments.

Operator A has a centralized control network. Each of the charging stations 110, 120, and 130 is connected via a respective telecommunication connection 101, 102, and 103 to a central control instance with a respective operator unit 100. Each charging station may receive a charging request 401 from an electric vehicle 400 and may in return charging power 402 the electric vehicle 400. The charging station communicates the request to the central control instance, where the request is processed and an answer is returned to the charging station indicating whether or not the energy may be delivered.

In embodiments of the invention, the charging request 401 may be sent from the vehicle upon connection with the charging station or by the owner/operator upon transmitting or inputting the request to the charging station. Alternatively the request may be sent directly to from the user to the central control instance.

Operator B may have a different control network. The charging stations 212, 211 of 200 are controlled in a cloud environment 210. That is, they are connected with each other and the request processing is organized in the cloud 210. However, the cloud 210 is connected to the central control instance 200 via connection 201 in order to allow for functions such as control, backup, and roaming clearing.

This embodiment is preferably realized utilizing a gateway. Said gateway being connected to each charging station and communicates, e.g. using a proprietary protocol via RS 485-bus, with the charging stations. The Communication regarding AAA is then forwarded to a backend via the gateway. In other words, the charging stations do not directly communicate with the backend, said communication is realized via the gateway.

In this embodiment, a charging request may be processed in the cloud 210. That is, the operator unit 200 may be realized in the cloud 210, and this is not shown. Alternatively the operator unit may be realized in the central control instance. The request may still be transmitted or inputted into a charging station. Alternatively, the request may be transmitted directly into the cloud 210 for processing and optionally relayed to the operator unit, if necessary.

Operator C has only one charging station 310. The central control instance 300 may be physically realized in or at the charging station. In other words, all control functions are localized in the charging station. In this embodiment, a charging request may be processed in the charging station and may be directly inputted thereto. Alternatively the request may be sent to the operator via a telecommunication network.

In the state of the art all charging control methods require some form of central control instance. Furthermore, roaming is usually realized similar to roaming in telecommunication networks, i.e. the central control instances of the operators are connected either directly or via a central instance for roaming clearing, also referred to a roaming clearing house. Such roaming clearing is very time consuming, since a request requires accessing to the customer database of another operator in the other operators central control instance.

In the following, a charging request processing according to embodiments of the invention is described. The user, of an electric vehicle 400 has a charging contract of some kind with operator B. That is, the user has authenticated himself with the operator B, and preferably has some kind of payment agreement with operator B, e.g. prepaid funds or a bank account information. This user, a user of operator B, sends a charging request 401 to charging station 110, a charging station of operator A. The request is relayed to the operator unit 100 for a decision.

According to the invention the operator unit 100 uses the blockchain 1 to verify that the user is a customer of operator B, in other words performs an authentication, authorization, and accounting (AAA) process for the user.

According to an embodiment of the invention, each operator A, B, C shares respective AAA information about their respective users blockchain 1 in a user registration phase. In a preferred embodiment the information about their respective users is restricted to a minimum necessary to provide AAA functionality and/or to fulfill legal standards. In said blockchain 1, at least one smart contract exists for registration of a user. After the registration all users of the operator are stored in the blockchain. Further smart contract may exist for managing the user-data in the blockchain, i.e. for removal and update of a user.

Alternatively or in addition a zero-knowledge proof is stored in the blockchain according to the invention. Said zero-knowledge proof allows for verifying required user properties. When a zero-knowledge proof is stored no privacy sensitive information is has to be stored and/or shared in the blockchain. Such a zero-knowledge poof may be used in particular for determined whether or not a user has a drivers license and/or has enough funds on his debit account.

According to an embodiment of the invention, operator A may use the blockchain 1 for AAA of a user. In said blockchain 1, at least one smart contract exists for AAA of a user. For authentication and authorization of the user, the operator A may simply call the corresponding smart contract and will receive the AAA information about the user from the blockchain 1.

Since the blockchain 1 is decentralized, i.e. its data is available at all of its nodes at all times, that is, all data is already available at the node of operator A, the operator A can immediately authorize the user for charging at charging station 110, without contacting operator B for AAA of its customer.

In the embodiments relating to operator 300, the operator unit would be localized at the charging station 310. The operator unit would then be connected preferably via a mobile telecommunication network to the blockchain 1. In those embodiments, each charging station becomes part of the blockchain network 1.

In embodiments of the invention it is preferred that the operators are connected to each other via a telecommunication network and the blockchain may preferably be operated in edge computing infrastructure of the telecommunication network.

The invention has the advantage that each user only needs one charging contract with one energy provider, i.e. operator, and could still be authorized for charging at any charging station operated by any another operator. The AAA is considerably accelerated since at all times each operator connected to the blockchain network 1 has all information about authorized users at the local node. Furthermore, each user may only be liable to his operator and all liabilities which in the network are negotiated via the blockchain network 1, preferably the liability is negotiated via a smart contract in the blockchain network 1. Still further, each transaction is documented tamper proof in the blockchain network 1.

In some embodiments of the invention, also the payment between the different operators is executed via smart contracts in the blockchain network 1. In other words, no direct micro payment is necessary between the user and the charging station, however, a balancing payment is performed between the operator of the user and operator operating the charging station. According to the invention, no central clearing house for such payments is necessary, because the payment is performed in the blockchain network 1 according to the invention.

In further embodiments of the invention, the payment for the charging may be performed in a separate second blockchain network, not shown. Said second network may be connected to the blockchain network 1 according to the invention. That is, the blockchain network 1 may be used for AAA of a user by the second blockchain network.

What has been described and illustrated herein are embodiments of the invention along with some variations thereof. The terms, descriptions and figures used herein are set forth by way of illustration only and are not meant as limitations. Those skilled in the art will recognize that many variations are possible within the spirit and scope of the invention, which is intended to be defined by the following claims -and their equivalents- in which all terms are meant in their broadest reasonable sense unless otherwise indicated.

## Claims

1. A method for processing a power charging request of a user at a charging station based on a blockchain network (1),
wherein one or more operators unit (100, 200, 300) is connected to the blockchain network and each operator unit (100, 200, 300) is connected to one or more charging stations of the operator (A, B, C),
wherein the method comprises the steps of:
A) in a user registration phase, each of the one or more operator units (100, 200, 300) executing a registration smart contract for registration of one or more user of the operator (A, B, C) to the blockchain network (1),
wherein upon execution of the registration, smart contract authentication, authorization, and accounting, AAA, information about each of the one or more users is stored in the blockchain network (1);
B) in a processing phase, one specific one of the one or more operator units (100, 200, 300),
receiving a charging request from a specific user for charging at the charging station operated by the specific operator of the specific operator unit (100, 200, 300);
executing a AAA smart contract for authentication, authorization, and accounting of the specific user in the blockchain network (1);
receiving from the blockchain network (1) the stored AAA information about the specific user; and
determining whether or not the charging request is confirmed and charging is initiated based on the AAA information received from the blockchain network (1),
wherein upon execution of the AAA smart contract the AAA information of the specific user is retrieved in the blockchain network (1) and returned to the specific operator unit (100, 200, 300).

2. Method according to claim 1, wherein the operator unit is located in a central control instance of the operator (A, B, C).

3. Method according to claim 1, wherein the operator unit is located at a charging station of the operator (A, B, C).

4. Method according to any one of claims 1 to 3, wherein the charging request is sent from the user to the operator unit (100, 200, 300), preferably via a wireless telecommunication network.

5. Method according to any one of claims 1 to 3, wherein the charging request is sent from the user to the charging station and then relayed to the operator unit (100,200,300), preferably via a wireless telecommunication network.

6. Method according to any one of claims 1 to 5, wherein the information about each of the one or more users comprises one or more zero-knowledge proofs that permit verifying required user properties.

7. A blockchain network for processing a charging request of a user,
wherein the blockchain network is connected to one or more operator unit (100, 200, 300) and each operator unit is connected to one or more charging stations of an operator (A, B, C),
wherein the blockchain network (1) is configured to store authentication, authorization, and accounting, AAA, information for one or more users,
wherein the blockchain network (1) is configured to process a registration smart contract from a specific operator unit for storing AAA information about a specific user of a specific operator (A, B, C) in the blockchain network (1),
wherein the blockchain network is configured to process a AAA smart contract from a specific operator unit (100, 200, 300) for a specific user of a specific operator (A, B, C) for retrieving AAA information about the specific user in the blockchain network (1) and returning the AAA information to the operator unit (100, 200, 300).

8. A blockchain network according to claim 6, wherein the AAA information about a specific user comprises one or more zero-knowledge proofs that permit verifying required user properties.

9. An operator unit for processing a charging request of a user based on a blockchain network (1) according to claim 7 or claim 8,
wherein the operator unit (100, 200, 300) is connected to the blockchain network (1) and is connected to one or more charging stations of the operator,
wherein the operator unit (100, 200, 300) is configured to
A) in a user registration phase, execute a registration smart contract for registration of one or more user of the operator (A, B, C) to the blockchain network (1); and
B) in a processing phase,
receive a charging request from a specific user for charging at a charging station;
execute a AAA smart contract for the specific user in the blockchain network (1);
receive from the blockchain network (1) the stored AAA information about the specific user; and
determine whether or not the charging request is confirmed and charging is initiated based on the AAA information received from the blockchain network (1).

10. A system for processing a charging request of a user based on a blockchain network, comprising a blockchain network according to claim 7 or claim 8 and one or more operator units according to claim 9.

11. System according to claim 10, wherein the operator unit is located in a central control instance of the operator (A, B, C).

12. System according to claim 10, wherein the operator unit is located at a charging station of the operator (A, B, C).

13. System according to any one of claims 10 to 12, wherein the charging request is sent from the user to the operator unit (100, 200, 300), preferably via a wireless telecommunication network.

14. System according to any one of claims 10 to 13, wherein the charging request is sent from the user to charging station and then relayed to the operator unit (100,200,300), preferably via a wireless telecommunication network.
